# EUROPEAN PATENT SPECIFICATION

(11) **EP 1 545 093 B1**
(45) Date of publication and mention of the grant of the patent: **21.11.2007**
(21) Application number: 04005843.0
(22) Date of filing: 11.03.2004
(51) Int. Cl.: H04L 29/08

(54) **Traffic control apparatus and service system using the same**
Vorrichtung zur Verkehrssteuerung und entsprechendes Servicesystem
Dispositif de contrôle de trafic et système de service correspondant

(30) Priority: 17.12.2003 JP 2003418905
(43) Date of publication of application: 22.06.2005
(73) Proprietor: Hitachi, Ltd., Chiyoda-ku, Tokyo 101-8010 (JP)
(72) Inventor: Nagami, Akihisa, Hitachi, Ltd., Int. Prop. Gp., Chiyoda-ku, Tokyo (JP); Ogawa, Yukio, Hitachi, Ltd., Int. Prop. Gp., Chiyoda-ku, Tokyo (JP); Nakahara, Masahiko, Hitachi, Ltd., Int. Prop. Gr., Chiyoda-ku, Tokyo (JP); Yokota, Daisuke, Hitachi, Ltd., Int. Prp. Gr., Chiyoda-ku, Tokyo (JP); Ueoka, Atsushi, Hitachi, Ltd., Int. Prop. Gr., Chiyoda-ku, Tokyo (JP)
(74) Representative: Strehl Schübel-Hopf & Partner

(56) References cited:
- EP-A- 1 349 339
- WO-A-02/078258
- US-A1- 2002 029 285
- US-A1- 2002 055 980

## Description

### BACKGROUND OF THE INVENTION

The present invention relates to a data communication method between client apparatuses and server apparatuses using a data communication relay system of the client apparatuses and the server apparatus and server access service using the data communication method.

As the Internet rapidly spreads in recent years, access methods to the Internet are diversified.

Server accesses from high-performance personal computers passing through the broad-band network having small delay are increased in the access network of the broad band as the background, while accesses from low-performance apparatuses passing through the narrow-band network having large delay, such as Web accesses from portable telephones and PDAs (Personal Digital Assistants) using the PHS (Personal Handy-phone System) network, are also increased.

Heretofore, Web servers and FTP servers are operated on condition that the number of client apparatuses (hereinafter referred to as client) simultaneously connected thereto is limited in order to prevent service from being stopped and performance from being degraded due to concentration of accesses to a server apparatus (hereinafter referred to as server) (refer to U.S. Patent application 2003/0028616, for example).

Details of HTTP (Hypertext Transfer Protocol) as a communication protocol used for the access to the Web server and how to use the protocol are explained in detail in "Hypertext Transfer Protocol - HTTP/1.1", F. Fielding, UC Irvine, J. Gettys, Compaq/W3C, J. Mogul, Compaq, H. Frystyk, W3C/MIT, L. Masinter, Xerox, P. Leach, Microsoft, T. Berners-Lee, W3C/MIT, June 1999, IETF, Internet URL:http://www.ietf.org/rfc/rfc2616.txt.

WO 02/078258 relates to a distribution system in which a plurality of client computers accessing a server are arranged in a plurality of tiers. The clients are ranked according to a performance score that indicates the clients' ability to replicate and distribute the data stream. The maximum number of connections may be changed dynamically depending on the amount of streaming content distributed by the server. However, the maximum number of connections is not made dependent on the processing performance of the respective client computers. The two-part form of present claims 1 and 2 has been based on this document.

### SUMMARY OF THE INVENTION

In the conventional Internet environment, there is no large difference in the network environment and network characteristics of the client. And in order to prevent the server from failing, it is sufficient to limit maximum number of clients simultaneously connected to the server.

When the accesses from the clients passing through the narrow-band network as PDA and personal telephones are concentrated, the load on the individual clients is not heavy, although since the processing time of the server is made longer, the performance of the server cannot be utilized sufficiently unless the maximum number of simultaneous connections in the server is set to be larger. On the other hand, when the accesses from the high-performance personal computers connected to the optical fiber network are concentrated, the processing load for the individual clients is heavy since the delay in the network and the reception delay in the client are small, so that the server is stopped if the number of simultaneous connections in the server is set to be larger.

In this manner, since the difference in performance of the client is enlarged, it is difficult to prevent the server from being stopped only by limiting the number of simultaneous connections to the clients.

Further, the time required until the service is received after connected to the server to transmit a server request is also varied depending on the load condition of the server and the situation that the service cannot be received promptly occurs although connected to the server.

Accordingly, the technique of providing the service by the server more stably is requested without degradation of the level.

This object is met by the invention as defined in the appended claims.

The present invention provides the technique that the server is operated stably by controlling the number of simultaneous connections to clients in consideration of the network characteristics of the client.

Further, the present invention provides the technique that a response time to a service request is estimated to immediately issue an access restriction message as a reply to a request predicted to require a time exceeding a fixed time in order to provide the service, so that the service is provided without keeping the user waiting for an uncertain long time.

According to an embodiment of the present invention, a traffic control apparatus for making relay processing while making data processing in the access to the server from the client is provided between the server and the client. In this configuration, when the client accesses to the server, the traffic control apparatus receives a request from the client and transfers the request to the server, so that the server provides the service requested by the client.

Characteristic features of the traffic control apparatus according to an embodiment of the present invention are :
The traffic control apparatus transfers a reply while estimating the data reception performance of the client when the reply from the server is transferred to the client.
The traffic control apparatus estimates a time required to provide the service to a service requesting party when a request is received from the client and prohibits the access when the time exceeding a fixed time is required. Consequently, the client is prevented from waiting for the service to be provided for an uncertain long time.
The traffic control apparatus includes a unit for registering requests from the clients into a queue and can control a timing of transferring a request received from a client to the server.
The traffic control apparatus controls the number of simultaneous connections in the server in accordance with the data transmission performance of the server and the data reception performance of the client when a request from the client is transferred to the server.

According to the present invention, it can be prevented that the requests are reached excessively to thereby stop the server and the throughput is reduced due to access restriction, so that reduction of the service level to the client can be prevented. Consequently, the investment to the server apparatus can be suppressed and the stability can be improved.

Further, the processing throughput of the service provided by the server can be improved.

Moreover, the possibility that the client from which a request is received is kept waiting for an uncertain long time can be reduced.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a schematic diagram illustrating a system using a traffic control apparatus according to an embodiment;
Fig. 2 is a schematic diagram illustrating a physical configuration of a client apparatus, a server apparatus and a traffic control apparatus according to the embodiment;
Fig. 3 is a schematic diagram illustrating the traffic control apparatus of the embodiment;
Fig. 4 is a flow chart (part 1) showing the relay processing in the traffic control apparatus of the embodiment;
Fig. 5 is a flow chart (part 2) showing the relay processing in the traffic control apparatus of the embodiment;
Fig. 6 is a flow chart (part 3) showing the notification processing in the traffic control apparatus of the embodiment;
Fig. 7 is a flow chart showing the processing in step 1004 of Fig. 4 relative to the processing of the embodiment;
Fig. 8 is a flow chart showing the processing in step 1006 of Fig. 4 relative to the processing of the embodiment;
Fig. 9 is a flow chart showing the processing in step 1007 of Fig. 4 relative to the processing of the embodiment;
Fig. 10 is a flow chart showing the processing in step 1008 of Fig. 4 relative to the processing of the embodiment;
Fig. 11 is a diagram showing the structure of a request queue management table (31) of the embodiment;
Fig. 12 is a diagram showing the structure of an access management table (32) of the embodiment;
Fig. 13 is a diagram showing the structure of a data reception performance-of-client table (33) of the embodiment;
Fig. 14 is a diagram showing the structure of a request (50) of the embodiment; and
Fig. 15 is a diagram showing the structure of a request queue management table (31) of a second embodiment.

### DESCRIPTION OF THE EMBODIMENTS

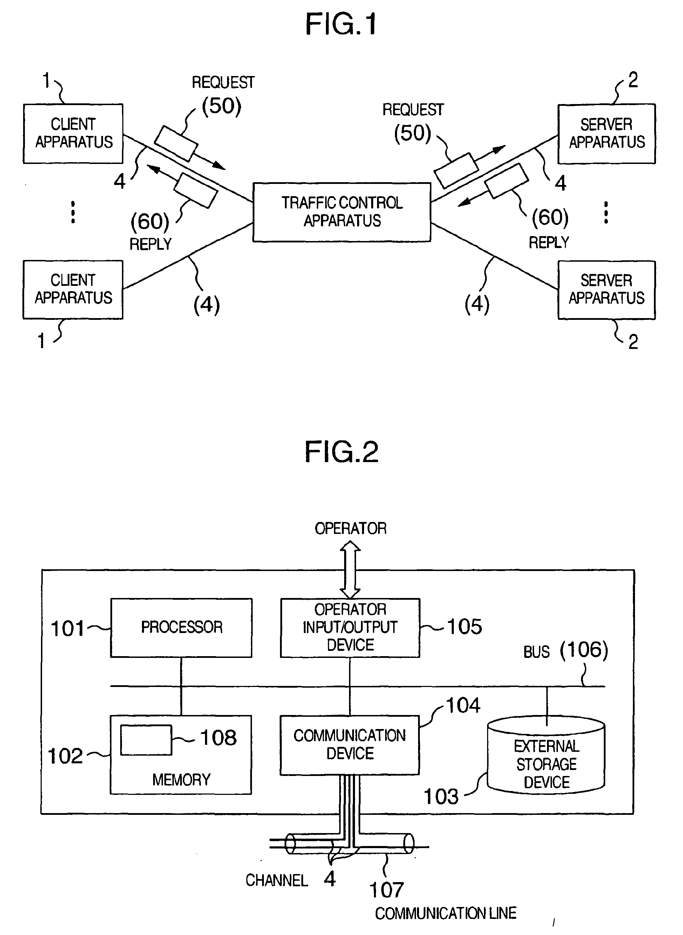

Fig. 1 is a schematic diagram illustrating a system using a data communication apparatus according to an embodiment.

In the embodiment, client apparatuses (1) and server apparatuses (2) are connected through one or more traffic control apparatuses (3) and channels (4). The traffic control apparatus (3) relays data communication between the client apparatus (1) and the server apparatus (2). That is, a service request (50) from the client apparatus (1) to the server apparatus (2) is always sent through the traffic control apparatus (3) and a reply (60) from the server apparatus (2) to the client apparatus (1) is also sent through the traffic control apparatus (3). The channel (4) is not necessarily required to be a physical communication line and may be a logical communication path realized on the physical communication line.

Fig. 2 illustrates an example of a physical configuration of each of the client apparatus (1), the server apparatus (2) and the traffic control apparatus (3) according to the embodiment. These apparatuses may be physically general information processing apparatuses as shown in Fig. 2. More particularly, each information processing apparatus includes, for example, a processor (101), a memory (102), an external storage device (103), a communication device (104) and an operator input/output device (105) connected through an internal communication line (106) such as a bus.

The processor (101) of each apparatus realizes the processing described in the following embodiment by executing an information processing program (108) stored in the memory (102).

The memory (102) stores various data referred from the information processing program (108) in addition to the information processing program (108).

The external storage device (103) stores the information processing program (108) and various data in the non-volatile manner. The processor (101) executes the information processing program (108) to thereby instruct the external storage device to load necessary program and data to the memory (102) and store the information processing program (108) and data stored in the memory (102) into the external storage device (103). The information processing program (108) may be previously stored in the external storage device (103). Alternatively, the information processing program (108) may be introduced or supplied from an external apparatus by mean of a portable memory medium or a communication medium, that is, a communication line or carrier wave transmitted through the communication line available by the information processing apparatus if necessary.

The communication device (104) is connected to a communication line (107) and transmits data to another information processing apparatus or communication apparatus in response to an instruction of the information processing program (108) and receives data from another information processing apparatus or communication apparatus to store it in the memory (102). The logical channels (4) between the apparatuses are realized by the physical communication line (107) by means of the communication device.

The operator input/output device (105) controls input/output of data between the operator and the information processing apparatus.

The internal communication line (106) is provided so that the processor (101), the memory (102), the external storage device (103), the communication device (104) and the operator input/output device (105) can make communication with each other through the internal communication line (106) and is constituted by, for example a bus.

The client apparatus (1), the server apparatus (2) and the traffic control apparatus (3) are not necessarily required to have physically different configuration and the functional difference of the respective apparatuses may be realized by the information processing program (108) executed in the respective apparatuses.

In the following description of the embodiment, a term of a processing unit is used to explain a constituent element in the embodiment, while each processing unit represents a logical configuration and may be realized by a physical apparatus or a function realized by executing the information processing program (108). Further, the client apparatus (1), the server apparatus (2) and the traffic control apparatus (3) are not required to be physical apparatuses independent of one another and may be realized by a single apparatus. Moreover, each processing unit is not required to be constituted by a single apparatus and may be realized by different apparatuses dispersed.

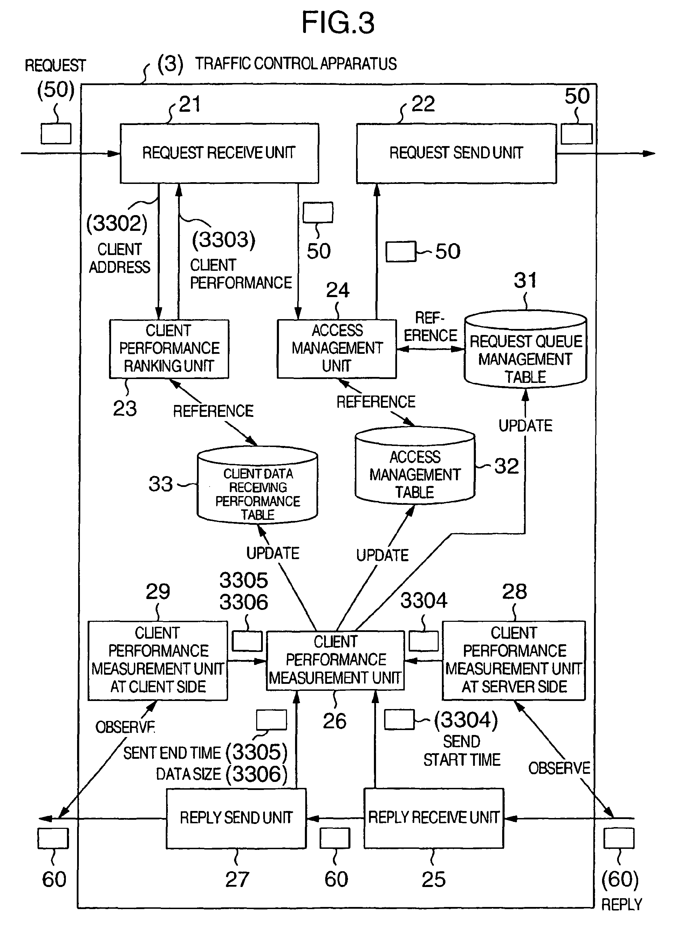

Fig. 3 is a schematic diagram illustrating the traffic control apparatus (3) of the embodiment.

The traffic control apparatus (3) of the embodiment includes a request receive unit (21) for receiving a request (50) from the client apparatus (1), a request send unit (22) for sending the request (50) to the server apparatus (2), a client performance ranking unit (23) for deciding the client performance from the address of the client apparatus (1), an access management unit (24) for setting the request from the client apparatus (1) into a queue to manage the request, a reply receive unit (25) for receiving a reply (60) from the server apparatus (2), a reply send unit (27) for sending the reply (60) to the client apparatus (1), a client performance measurement unit (26) for measuring data reception performance of the client apparatus (1), a request queue management table (31) for managing the request from the client apparatus (1), an access management table (32) for managing the access situation to the server apparatus (2), and a data reception performance-of-client table (33) for managing the reception performance of the client apparatus (1).

Further, the traffic control apparatus (3) may include a client performance measurement unit 28 at the server side for observing the network on the side of the server apparatus (1) to measure the time that the reply (60) is sent and a client performance measurement unit (29) at the client side for observing the network on the side of the client apparatus (1) to measure the time that the reply (60) is received.

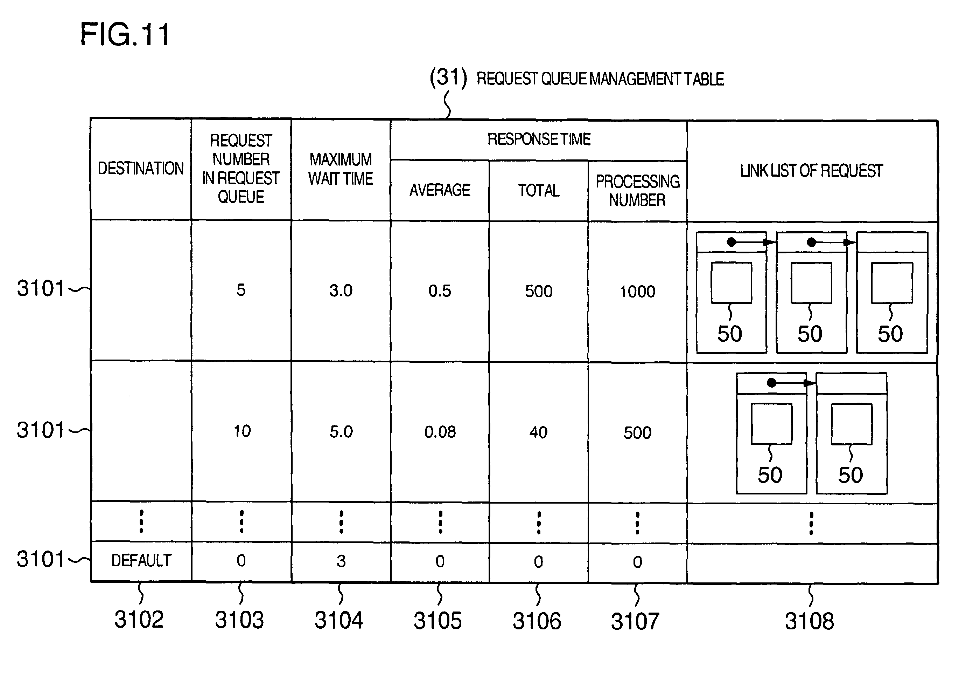

Fig. 11 shows an example of the structure of the request queue management table (31) of the embodiment. The request queue management table (31) is a table having a destination field (3102) as a key and is used to manage requests to particular destinations designated by the destination field (3102) by means of the queue.

Each entry (3101) of the request queue management table (31) of the embodiment includes, in addition to the destination field (3102), a number-of-requests-in-queue field (3103) representing the number of requests set in the queue, a maximum wait time field (3104) representing a maximum wait time of service of the destination field (3102), an average response time field (3105) representing an average of the response time, a total response time field (3106) and a processing number field (3107) of the response time required to calculate the average of the response time, and a request link list field (3108) for managing the requests (50) in the link list.

The destination field (3102) and the maximum wait time field (3104) are previously set by the operator.

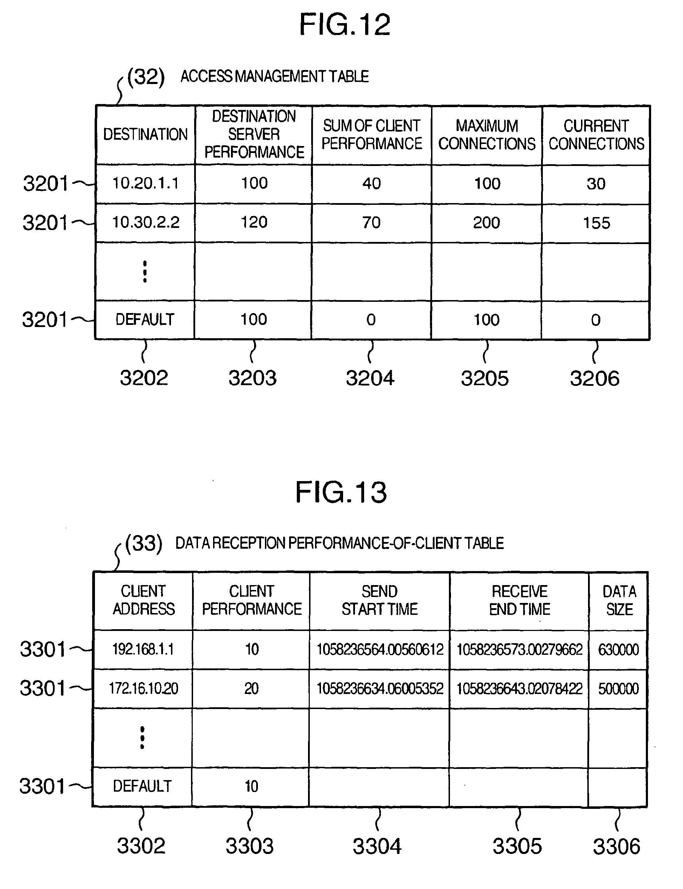

Fig. 12 shows an example of the structure of the access management table (32) of the embodiment. The access management table (32) is a table having a destination field (3202) as a key and is used to manage access situations to particular destinations designated by the destination field (3202).

Each entry (3201) of the access management table of the embodiment includes, in addition to the destination field (3202), a destination server performance field (3203) representing performance of the destination server, a sum-of-client-performance field (3204) representing transfer performance of the client currently connected, a maximum connections field (3205) representing a maximum allowable number of clients capable of being connected to the server at the same time, and a current connections field (3206) representing the number of clients currently connected.

The destination field (3202), the destination server performance field (3203) and the maximum connections field (3205) are previously set by the operator.

Fig. 13 shows an example of the structure of the data reception performance-of-client table (33) of the embodiment. The data reception performance-of-client table (33) is a table having client addresses as keys and is used to manage the data reception performance of particular clients designated by the client address field (3302).

Each entry (3301) of the data reception performance-of-client table (33) of the embodiment includes, in addition to the client address field (3302), a data reception performance-of-client field (3303) representing data reception performance of the client, and a send start time field (3304), a receive end time field (3305) and a data size field (3306) representing the data send start time, the data receive end time and the data size used to calculate the data reception performance, respectively.

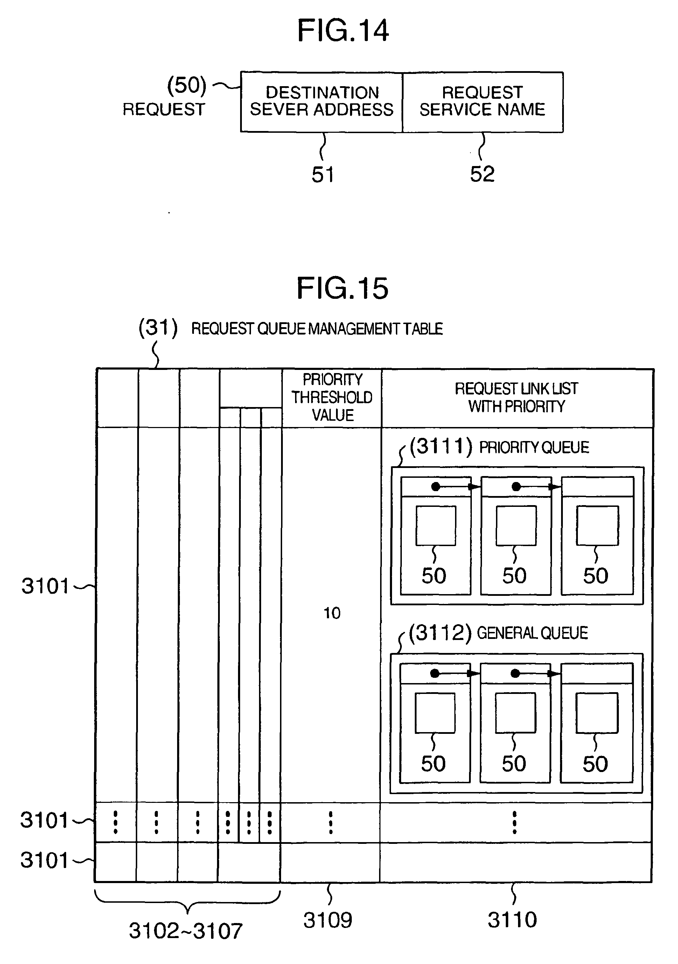

Fig. 14 shows an example of the structure of the request (50) including a destination server address (51) and a request service name (52).

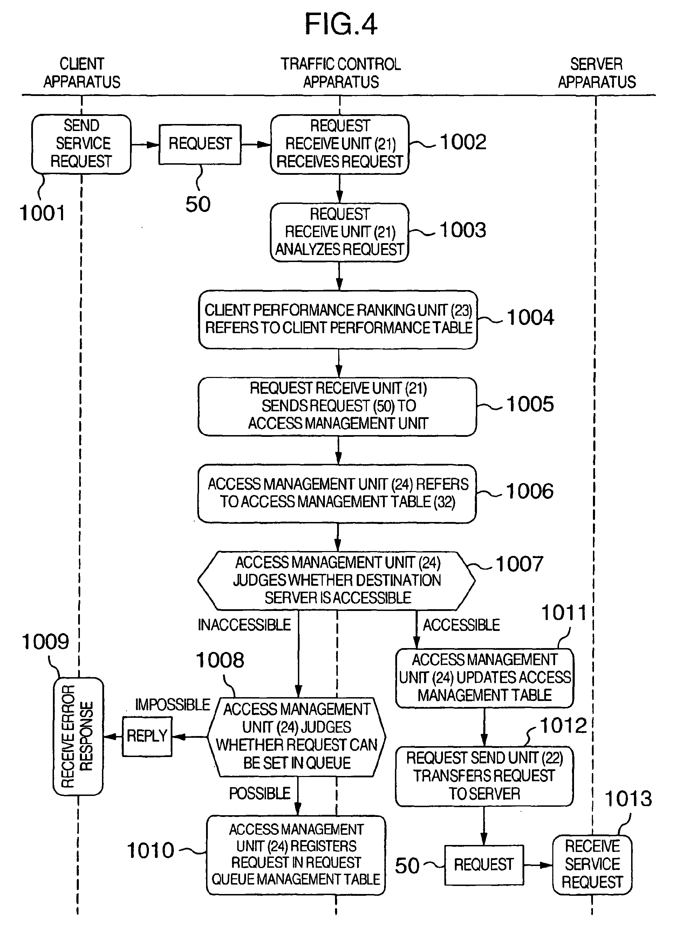

Fig. 4 is a flow chart showing a processing flow of the traffic control apparatus (3) of the embodiment for transferring the request (50) sent by the client apparatus to the server apparatus (2).

The client apparatus (1) sends a service request to a destination server apparatus (2) through the traffic control apparatus (3) (step 1001). At this time, the client apparatus (1) may send the request to the traffic control apparatus (3) while the client apparatus (1) itself is conscious of the traffic control apparatus (3), or a router for relaying data communication may transfer the request (50) directed to the destination server apparatus (2) to the traffic control apparatus (3) without consciousness of the traffic control apparatus (3) by the client apparatus (1).

The request receive unit (21) of the traffic control apparatus (3) receives the service request (50) from the client apparatus (1) (step 1002).

The request receive unit (21) analyzes the received request and identifies a client address, a destination server address (51) and a request service name (52) (step 1003).

The client performance ranking unit (23) retrieves the data reception performance-of-client table (33) using the client address as a key. If there is an entry, a value in the data reception performance-of-client field (3303) of this entry is returned to the request receive unit (21). If there is no relevant entry, a new entry is prepared or set additionally by setting the same value as the default in each field (step 1004).

The request receive unit (21) sends the request (50) to the access management unit (24) together with the data reception performance (3303) of the client (step 1005).

The access management unit (24) retrieves or searches the access management table (32) for the entry corresponding to the received request (50). If there is no entry corresponding to the request, a new entry is prepared additionally by setting the same value as the default in each field (step 1006).

The access management unit (24) judges whether the destination server apparatus (2) is accessible or not on the basis of information in the entry obtain in step 1006 (step 1007).

When it is accessible as a result of step 1007, the access management unit (24) adds a performance value of the client being processed currently to a value in the sum-of-client-performance field (3204) of the corresponding access management entry (3201). Further, a value in the current connections fields (3206) is incremented by 1. Then, the access management unit (24) sends the request (50) to the request send unit (22) (step 1011).

The request send unit (22) sends the received request (50) to the server unit (2) (step 1012).

After step 1012, in order to provide the processing time to the client, a value in the maximum wait time field (3104) of the destination may be set in the head of the response contents in the form of chunk of HTTP and returned to the client. However, this processing is limited to the session whose request target is a text content such as HTML.

The server apparatus (2) receives the service request (50) and starts processing for the service (step 1013).

When it is not accessible as a result of step 1007, the access management unit (24) refers to the request queue management table (31) to judge whether the request can be set in the queue or not (step 1008).

When it can be set in the queue as a result of step 1008, the request is added to the request link list field (3108) of the entry of the destination corresponding to the request (50) and a value in the request number field in the queue is incremented by 1 (step 1010).

When the queuing is impossible as a result of step 1008, an access restriction message is returned to the client apparatus (2) (step 1009).

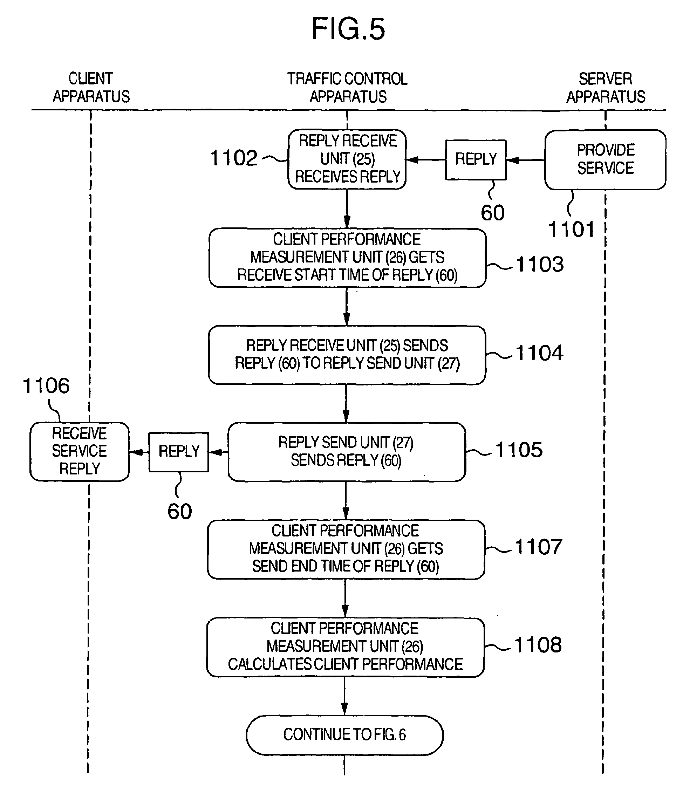

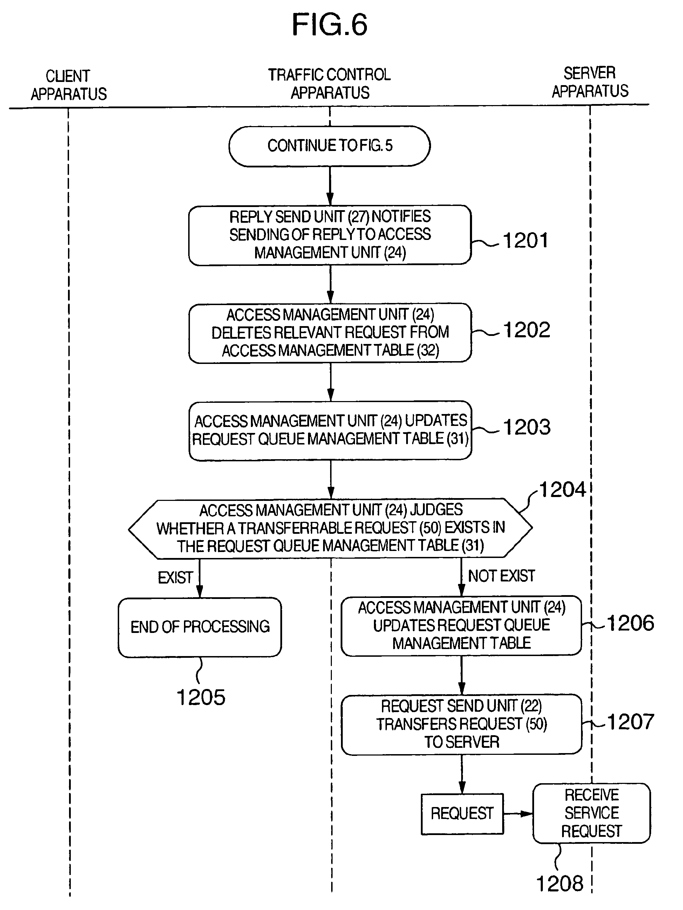

Figs. 5 and 6 are flow charts showing the processing flow of the traffic control apparatus (3) of the embodiment for transferring the reply (60) sent by the server apparatus (2) to the client apparatus (1).

In Fig. 5, the server apparatus (2) ends the processing for the requested service and sends the reply (60) (step 1101) in order to provide the service to the client apparatus (1).

The reply receive unit (25) of the traffic control apparatus (3) receives the reply (60) sent by the server apparatus (2) (step 1102).

The client performance measurement unit (26) gets a start time of sending the reply (60) by the server apparatus (2). This start time is gotten from the reception time of the reply (60) by the reply receive unit (25). However, when the client performance measurement unit (28) at the server side observes the channel (4) between the traffic control apparatus (3) and the server apparatus (2), the client performance measurement unit (28) at the server side may decide the time that the server apparatus (2) starts to send the reply (60) to notify it to the client performance measurement unit (26). The client performance measurement unit (26) gets the start time of sending the reply (60) and when a value in the send start time field (3304) of the entry (3301) corresponding to the client address in the data reception performance-of-client table (33) is not set, the client performance measurement unit (26) sets the start time therein (step 1103). The send start time field (3304) is set when the head of the reply (60) is sent to the client, for example, and accordingly it is not set until the head is sent.

The reply receive unit (25) sends the reply (60) to the reply send unit (27) (step 1104).

The reply send unit (27) sends the reply (60) to the client apparatus (1) (step 1105).

The client apparatus (1) receives the reply (60) and receives the requested service (step 1106).

The client performance measurement unit (26) gets the time that the client apparatus (1) has received the reply (60). This time is gotten from the time that the reply send unit (27) ends sending of the reply (60). However, when the client performance measurement unit (29) at the client side observes the channel (4) between the traffic control apparatus (3) and the client apparatus (1), the client performance measurement unit (29) at the client side may decide the time that the client apparatus (1) ends reception of the reply (60) and notify it to the client performance measurement unit (26). The client performance measurement unit (26) gets the receive end time of the reply (60) and when a value in the receive end time field (3305) of the entry (3301) corresponding to the client address in the data reception performance-of-client table (33) is not set, the client performance measurement unit (26) sets the receive end time therein. The receive end time field (3305) is set when the last of the reply (60) has been sent to the client and accordingly it is not set until the last is sent. Further, the data size of the transferred reply (60) is set in the data size field (3306) of the same entry (step 1107).

In order to calculate the data reception performance of the client apparatus (1) being processed currently, the client performance measurement unit (26) subtracts the value in the send start time field (3304) from the value in the receive end time field (3305) of the corresponding entry and divides the value in the data size field (3306) by the subtracted result to set the divided result in the data reception performance-of-client field (3303). After this calculation is ended, the values in the send start time field (3304), the receive end time field (3305) and the data size field (3306) are deleted. At this time, the client performance measurement unit (26) may update the value in the sum-of-client-performance field (3204) of the access management table (32) (step 1108).

The processing of steps 1107 and 1108 may be executed at intervals of time set by the operator or at each of the send data size set in the data size field while the reply is being sent to the client in step 1105. Consequently, the client performance can be varied dynamically, so that when the session extends over a long time as streaming, the client performance can be decided dynamically on the way of the session.

In Fig. 6, the reply send unit (27) notifies the access management unit (24) that the sending processing is ended (step 1201).

The access management unit (24) receives the notification from the reply send unit (27) and deletes the request (50) that sending of the reply (60) thereto is ended from the access management table (32) (step 1202).

The access management unit (24) deletes the relevant request (50) from the request link list field (3108) of the request queue management table (31) and decrements the value in the number-of-requests-in-queue field (3103) by 1. Next, in order to update the average response time field (3105), the access management unit (24) increments the value in the processing number field (3107) of the response time by 1 and adds the response time to the total response time field (3106). The added value is divided by the value in the processing number field (3107) of the response time and the divided value is set in the average response time field (3105) (step 1203).

The access management unit (24) searches the request queue management table (31) to judge whether a next transferable request (50) exists therein (step 1204).

As a result of step 1204, when there is no next transferable request (50), the processing is ended (step 1205). When there is the next transferable request (50), the access management unit (24) deletes the next request (50) to be transferred from the request link list field (3108) of the request queue management table (31) and decrements the value in the number-of-requests-in-queue field (3103) by 1. The deleted next request (50) is sent to the request send unit (22) (step 1206).

The request send unit (22) sends the next request (50) to the server apparatus (2) (step 1207).

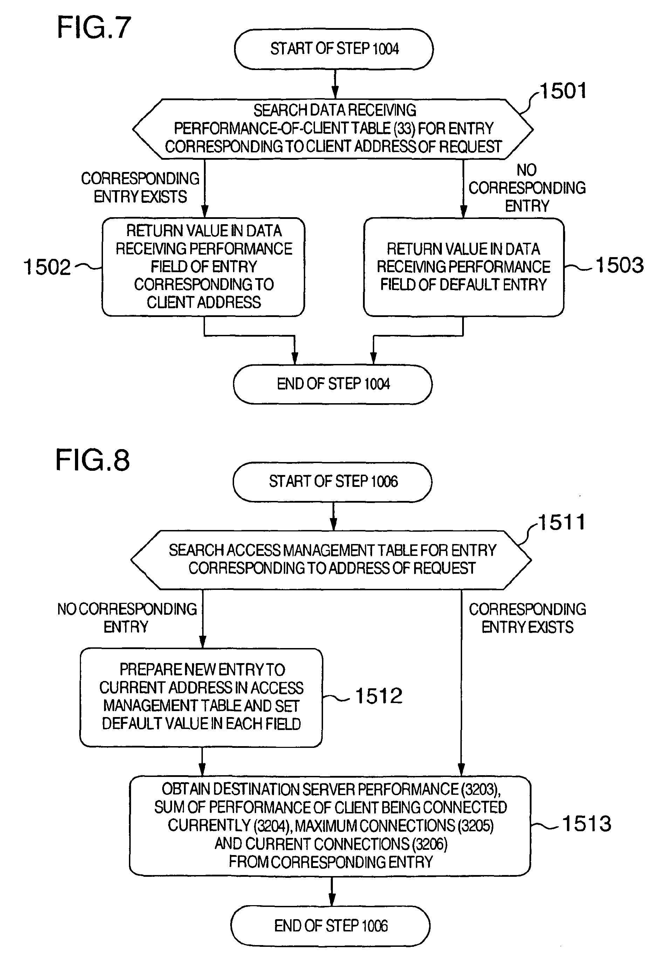

The server apparatus (2) receives the next request (50) sent from the traffic control apparatus (3) and starts processing for providing service (step 1208). Fig. 7 is a flow chart showing the processing of step 1004.

The client performance ranking unit (23) searches the data reception performance-of-client table (33) for an entry corresponding to the client address of the request (50) (step 1501).

When there is the corresponding entry, the value in the data reception performance field (3303) of the entry (3301) corresponding to the client address is returned (step 1502).

When there is no corresponding entry, a new entry is added to the data reception performance-of-client table (33) and the value in the default is set in each field. The value in the data reception performance field (3303) of the default entry is returned (step 1503).

Fig. 8 is a flow chart showing the processing of step 1006.

The access management unit (24) searches the access management table (32) for the entry corresponding to the destination of the request (50) (step 1511).

When there is no corresponding entry, the access management unit (24) prepares a new entry to a current destination in the access management table (32) and the default value is set in each field (step 1512).

Then, the destination server performance (3203), the sum of performance of the client being connected currently (3204), the maximum connections (3205) and the current connections (3206) are obtained from the corresponding entry (step 1513).

As a result of step 1511, when there is the corresponding entry, the processing of step 1513 is performed and the processing of step 1006 is ended.

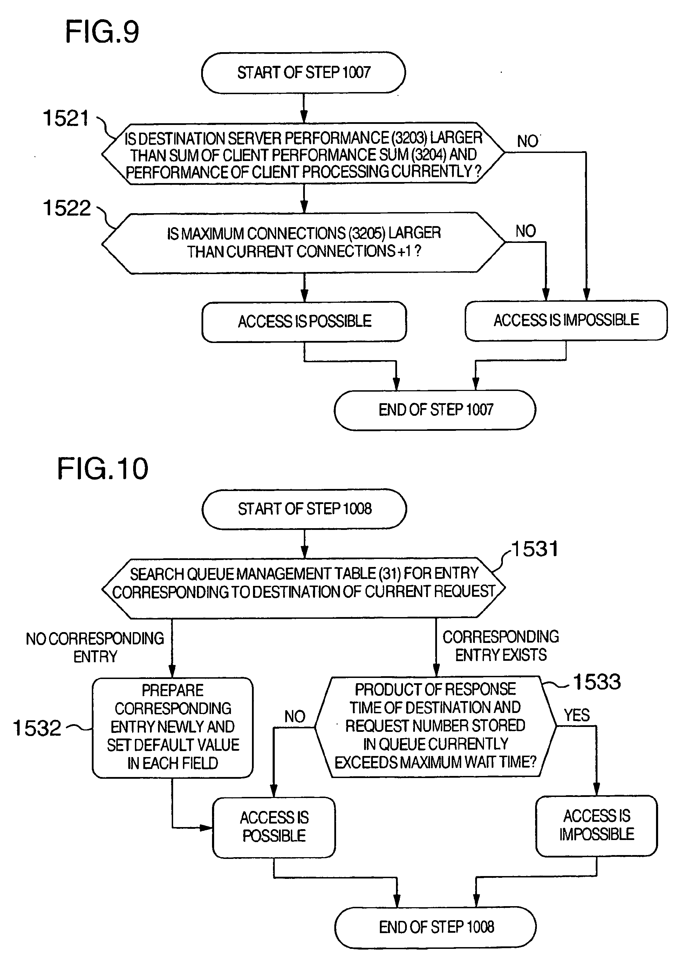

Fig. 9 is a flow chart showing the processing of step 1007.

The access management unit (24) confirms whether the destination server performance (3203) is larger than a value obtained by adding the sum of the client performance (3204) to the performance of the client apparatus (1) currently processing the request (50) (step 1521).

When it is not larger, a message that the access is impossible is returned and the processing of step 1007 is ended.

When it is larger, the access management unit (24) confirms whether the maximum connections (3205) is larger than a sum of the current connections (3206) and 1 (step 1522).

When it is not larger, a message that the access is impossible is returned and when it is larger, a message that the access is possible is returned and the processing of step 1007 is ended.

Fig. 10 is a flow chart showing the processing of step 1008.

The access management unit (24) searches the queue management table (31) for the entry corresponding to the destination of the current request (step 1531).

As a result of step 1531, when there is no corresponding entry, the corresponding entry is prepared newly and the default value is set in each field (step 1532). Then, a message that the access is possible is returned and the processing of step 1008 is ended.

As a result of step 1531, when there is the corresponding entry, the access management unit (24) confirms whether the product of the value in the average response time field (3105) and the value in the number-of-requests-in-queue field (3103) representing the number of requests stored in the queue currently exceeds the value in the maximum wait time field (3104) (step 1533). In other words, the maximum number of requests (maximum length of queue) managed by the request link list (3108) can be controlled by the average response time of the destination and it is possible to control not to set the request in the queue when there is the possibility that the waiting time of processing exceeds the maximum waiting time (3104).

When the maximum waiting time is exceeded, a message that the access is impossible is returned and when the maximum waiting time is not exceeded, a message that the access is possible is returned and the processing of the step 1008 is ended.

As described above, according to the embodiment, since the number of accesses to the server apparatus (2) is controlled properly even in various conditions of communication band and transmission delay with the client apparatus (1), it can be prevented that the requests are reached excessively and the server apparatus (2) cannot provide service and further the throughput can be prevented from being reduced due to excessive limitation of accesses, so that reduction of the service level for the client server (1) can be prevented.

Consequently, since the performance of the server apparatus can be exhibited sufficiently, even a small number of server apparatuses can cope with a large number of accesses. That is, the investment to the server apparatus can be suppressed and the stability of providing the service can be improved.

Further, whether the request is received or not, the client apparatus can receive any reply and accordingly the possibility that the client apparatus waits for an uncertain long time is reduced. Moreover, when a request is received and a reply is returned within the value in the maximum waiting time field (3104), it can be expected that the service is provided within a fixed time. Accordingly, it is prevented that the client apparatus executes service request many times and the load on the server is increased.

Heretofore, when the accesses exceeding the estimated value of the service provider are concentrated, the load on the server apparatus is excessive and the state that the service cannot be provided occurs, although by applying the embodiment, the service can be provided by the server apparatus stably and the opportunity for providing the service is given even to the user notified of rejection of access. Accordingly, it is not necessary to estimate the performance of the server apparatus to higher value than needs.

Next, a second embodiment in which the priority is changed in accordance with the data reception performance such as network characteristics of the client apparatus (1) is described.

In the embodiment, the request queue management table (31) is structured as shown in Fig. 15.

The request queue management table (31) includes, instead of the request link list field (3108) of Fig. 11, a request link list field (3110) with priority and a priority threshold value field (3109) in which a reference value or threshold value is set to judge whether the data reception performance of the client is larger than the threshold value and to set the request of the client in a priority queue when it is larger. The request link list field (3110) with priority includes the priority queue (3111) that the request set therein is processed preferentially according to the priority and a general queue (3112) that the request set therein is not processed preferentially.

In step 1010 of Fig. 4, in which the access management unit (24) registers the request in the request queue management table (31), when the data reception performance of the client apparatus (1) issuing the request is larger than the threshold value in the priority threshold value field (3109), the request is added to the priority queue (3111) and when it is not larger, the request is added to the general queue (3112).

Further, if the value in the sum-of-client-performance field (3204) of the access management table (32) exceeds the value in the destination server performance field (3203) when the request is added to the priority queue (3111), the request (50) already added to the general queue may be deleted from the link list of the general queue (3112) in newly added order so that the value in the sum-of-client-performance field (3204) is smaller than the value in the destination server performance field (3203). Moreover, when the already added request is deleted, an access restriction message may be returned as a reply in the same manner as step 1009.

Further, in step 1204 of Fig. 6, when the transferable request is searched for, the priority queue (3111) is searched first. If there is no request (50) transferable to the priority queue (3111), the general queue (3112) is searched.

According to the embodiment that the processing priority is changed depending on the network characteristics of the client apparatus, since the processing for the client apparatus having the wideband network can be performed preferentially and the processing for the client apparatus having poor response can be performed later, the server apparatus can further improve the throughput of service.

The specification and drawings are, accordingly, to be regarded in an illustrative rather than a restrictive sense. It will, however, be evident that various modifications and changes may be made thereto without departing from the scope of the invention as set forth in the claims.

## Claims

1. A method for controlling a traffic control apparatus (3) which is disposed between at least one server apparatus (2) for providing service and a plurality of client apparatuses (1) for issuing a service request to said server apparatus (2), and which is capable of controlling traffic between said at least one server apparatus (2) and said plurality of client apparatuses (1), comprising the steps of:
receiving (1002) a service request (50) issued to said server apparatus (2) by one of said client apparatuses (1);
transmitting (1012) said service request (50) to said server apparatus (2);
receiving (1102) from said server apparatus (2) a response (60) to said service request (50);
transmitting (1105) said response (60) to said one client apparatus (1),
**characterised by** the steps of:
measuring (1107) the time (3304, 3305) for receiving said response (60) from said server apparatus (2) by said one client apparatus (1) and the data size (3306) of said response, and storing a value (3303) which is obtained by dividing said data size (3306) by said time (3304, 3305) and indicates a processing performance of said one client apparatus (1);
adding (1108) said value (3303) to obtain a sum of client performance (3204) stored in correspondence with said server apparatus (2); and
refusing (1007, 1521) the acceptance of a new service request from said plurality of client apparatuses (1) to said server apparatus (2) when said sum of client performance (3204) exceeds a processing performance value (3203) stored in advance for said server apparatus (2).

2. A traffic control apparatus for controlling traffic between at least one server apparatus (2) for providing service and a plurality of client apparatuses (1) for issuing a service request to said server apparatus (2), comprising:
means (21) for receiving a service request (50) issued to said server apparatus (2) by one of said client apparatuses (1);
means (22) for transmitting said service request (50) to said server apparatus (2);
means (25) for receiving from said server apparatus (2) a response (60) to said service request (50);
means (27) for transmitting said response (60) to said one client apparatus (1),
**characterised by**:
means (28) for measuring the time (3304, 3305) for receiving said response (60) from said server apparatus (2) by said one client apparatus (1) and the data size (3306) of said response, and storing a value (3303) which is obtained by dividing said data size (3306) by said time (3304, 3305) and indicates a processing performance of said one client apparatus (1);
means (26) for adding said value (3303) to obtain a sum of client performance (3204) stored in correspondence with said server apparatus (2); and
means (24) for refusing the acceptance of a new service request from said plurality of client apparatuses (1) to said server apparatus (2) when said sum of client performance (3204) exceeds a processing performance value (3203) stored in advance for said server apparatus (2).

3. The apparatus of claim 2, further comprising:
a unit for estimating a waiting time of the reply supplied by the server apparatus (2); and
a unit for sending an access restriction message for rejecting the request when the waiting time is longer than a fixed time.

4. The apparatus of claim 2, further comprising a unit for changing a priority used to relay the request to the server apparatus (2) in accordance with the processing performance of the client apparatus (1).

5. The apparatus of claim 4, further comprising a unit for making an access restriction on the request already received from the client apparatus (1) when the priority of the request received later is higher than that of the already received request.

6. The apparatus of claim 2, further comprising a unit for changing a priority of the request relayed to the server apparatus (2) in accordance with the processing performance of the client apparatus (1).

7. The apparatus of claim 6, further comprising a unit for controlling an average response time to the client apparatus (1) within a fixed time.

8. The apparatus of claim 2, further comprising a unit for providing a maximum processing time of the request to the client apparatus (1) before the request is transferred to the server apparatus (2).

9. A service system including
a server apparatus (2) for receiving service requests from client apparatuses (1), and
a traffic control apparatus (3) in accordance with any of claims 2 to 8.

## Patentansprüche

1. Verfahren zur Steuerung eines Verkehrssteuergeräts (3), das zwischen wenigstens einem Server-Gerät (2) zum Bereitstellen einer Dienstleistung und mehreren Client-Geräten (1) zur Ausgabe von Dienstanfragen an das Server-Gerät (2) angeordnet ist und das dazu ausgelegt ist, den Verkehr zwischen dem wenigstens einen Server-Gerät (2) und den mehreren Client-Geräten (1) zu steuern, wobei
eine von einem der Client-Geräte (1) an das Server-Gerät (2) ausgegebene Dienstanfrage (50) empfangen (1002) wird,
die Dienstanfrage (50) an das Server-Gerät (2) übertragen (1012) wird,
eine Antwort (60) auf die Dienstanfrage (50) von dem Server-Gerät (2) empfangen (1102) wird,
die Antwort (60) an das eine Client-Gerät (1) übertragen (1105) wird,
**dadurch gekennzeichnet, daß**
die Zeit (3304, 3305) zum Empfangen der Antwort (60) von dem Server-Gerät (2) durch das eine Client-Gerät (1) und die Datengröße (3306) der Antwort gemessen (1102) und ein Wert (3303) gespeichert wird, der durch Division der Datengröße (3306) durch die Zeit (3304, 3305) erhalten wird und der eine Verarbeitungsleistung des einen Client-Geräts (1) angibt,
der Wert (3303) addiert (1108) wird, um eine Summe der Client-Leistung (3204) zu erhalten, die in Entsprechung mit dem Server-Gerät (2) gespeichert wird, und
die Annahme einer neuen Dienstanfrage von den mehreren Client-Geräten (1) an das Server-Gerät (2) abgelehnt (1007, 1521) wird, wenn die Summe der Client-Leistung (3204) einen Verarbeitungsleistungswert (3203) überschreitet, der zuvor für das Server-Gerät (2) gespeichert wurde.

2. Verkehrssteuergerät zum Steuern des Verkehrs zwischen wenigstens einem Server-Gerät (2) zum Bereitstellen einer Dienstleistung und mehreren Client-Geräten (1) zur Ausgabe einer Dienstanfrage an das Server-Gerät (2), mit
einer Einrichtung (21) zum Empfangen einer durch eines der Client-Geräte (1) an das Server-Gerät (2) ausgegebenen Dienstanfrage (50),
eine Einrichtung (22) zum Übertragen der Dienstanfrage (50) an das Server-Gerät (2),
einer Einrichtung (25) zum Empfangen einer Antwort (60) auf die Dienstanfrage (50) von dem Server-Gerät (2),
einer Einrichtung (27) zum Übertragen der Antwort (60) an das eine Client-Gerät (1),
**gekennzeichnet durch**
eine Einrichtung (28), um die Zeit (3304, 3305) zum Empfangen der Antwort (60) von dem Server-Gerät (2) **durch** das eine Client-Gerät (1) und die Datengröße (3306) der Antwort zu messen, und um einen Wert (3303) zu speichern, der **durch** Division der Datengröße (3306) **durch** die Zeit (3304, 3305) erhalten wird und eine Verarbeitungsleistung des einen Client-Geräts (1) angibt,
eine Einrichtung (26) zum Addieren des Werts (3303), um eine Summe der Client-Leistung (3204) zu erhalten, die in Entsprechung mit dem Server-Gerät (2) gespeichert wird, und
eine Einrichtung (24) zum Ablehnen der Annahme einer neuen Dienstanfrage von den mehreren Client-Geräten (1) an das Server-Gerät (2), wenn die Summe der Client-Leistung (3204) einen Verarbeitungsleistungswert (3203) überschreitet, der zuvor für das Server-Gerät (2) gespeichert wurde.

3. Gerät nach Anspruch 2, ferner mit
einer Einheit zum Abschätzen einer Wartezeit auf die durch das Server-Gerät (2) bereitgestellte Antwort, und
einer Einheit zum Senden einer Zugriffsbeschränkungsmitteilung zum Zurückweisen der Anfrage, wenn die Wartezeit länger ist als ein Festwert.

4. Gerät nach Anspruch 2, ferner mit einer Einheit zum Ändern einer zur Weitergabe der Anfrage an das Server-Gerät (2) verwendeten Priorität gemäß der Verarbeitungsleistung des Client-Geräts (1).

5. Gerät nach Anspruch 4, ferner mit einer Einheit zum Durchführen einer Zugriffsbeschränkung auf die bereits von dem Client-Gerät (1) empfangene Anfrage, wenn die Priorität der später empfangenen Anfrage höher ist als die der bereits empfangenen Anfrage.

6. Gerät nach Anspruch 2, ferner mit einer Einheit zum Ändern einer Priorität der an das Server-Gerät (2) weitergegebenen Anfrage gemäß der Verarbeitungsleistung des Client-Geräts (1).

7. Gerät nach Anspruch 6, ferner mit einer Einheit zum Regeln einer Durchschnittsantwortzeit zu dem Client-Gerät (1) innerhalb einer Festzeit.

8. Gerät nach Anspruch 2, ferner mit einer Einheit zum Bereitstellen einer Maximalverarbeitungszeit der Anfrage zu dem Client-Gerät (1) bevor die Anfrage an das Server-Gerät (2) übertragen wird.

9. Servicesystem mit
einem Server-Gerät (2) zum Empfangen von Dienstanfragen von Client-Geräten (1), und
einem Verkehrssteuergerät (3) gemäß einem der Ansprüche 2 bis 8.

## Revendications

1. Procédé pour commander un dispositif de contrôle de trafic (3) qui est disposé entre au moins un dispositif serveur (2) pour fournir un service et une pluralité de dispositifs clients (1) pour envoyer une demande de service audit dispositif serveur (2), et qui est capable de contrôler le trafic entre ledit au moins un dispositif serveur (2) et ladite pluralité de dispositifs clients (1), comportant les étapes consistant à :
recevoir (1002) une demande de service (50) émise audit dispositif serveur (2) par l'un desdits dispositifs clients (1),
transmettre (1012) ladite demande de service (50) audit dispositif serveur (2),
recevoir (1102) depuis ledit dispositif serveur (2) une réponse (60) à ladite demande de service (50),
transmettre (1105) ladite réponse (60) audit un dispositif client (1),
**caractérisé par** les étapes consistant à :
mesurer (1107) le temps (3304, 3305) pour recevoir ladite réponse (60) depuis ledit dispositif serveur (2) par ledit un dispositif client (1) et la taille de données (3306) de ladite réponse, et mémoriser une valeur (3303) qui est obtenue en divisant ladite taille de données (3306) par ledit temps (3304, 3305) et indique une performance de traitement dudit dispositif client (1),
ajouter (1108) ladite valeur (3303) pour obtenir une somme de performance de client (3204) mémorisée en correspondance avec ledit dispositif serveur (2), et
refuser (1007, 1521) l'acceptation d'une nouvelle demande de service provenant de ladite pluralité de dispositifs clients (1) vers ledit dispositif serveur (2) lorsque ladite somme de performance de client (3204) dépasse une valeur de performance de traitement (3203) mémorisée à l'avance pour ledit dispositif serveur (2).

2. Dispositif de contrôle de trafic pour contrôler le trafic entre au moins un dispositif serveur (2) pour fournir un service et une pluralité de dispositifs clients (1) pour envoyer une demande de service audit dispositif serveur (2), comportant :
des moyens (21) pour recevoir une demande de service (50) envoyée audit dispositif serveur (2) par l'un desdits dispositifs clients (1),
des moyens (22) pour transmettre ladite demande de service (50) audit dispositif serveur (2),
des moyens (25) pour recevoir depuis ledit dispositif serveur (2) une réponse (60) à ladite demande de service (50),
des moyens (27) pour transmettre ladite réponse (60) audit dispositif client (1),
**caractérisé par** :
des moyens (28) pour mesurer le temps (3304, 3305) pour recevoir ladite réponse (60) depuis ledit dispositif serveur (2) par ledit dispositif client (1) et la taille de données (3306) de ladite réponse, et mémoriser une valeur (3303) qui est obtenue en divisant ladite taille de données (3306) par ledit temps (3304, 3305) et indique une performance de traitement dudit dispositif client (1),
des moyens (26) pour ajouter ladite valeur (3303) pour obtenir une somme de performance de client (3204) mémorisée en correspondance avec ledit dispositif serveur (2), et
des moyens (24) pour refuser l'acceptation d'une nouvelle demande de service provenant de ladite pluralité de dispositifs clients (1) vers ledit dispositif serveur (2) lorsque ladite somme de performance de client (3204) dépasse une valeur de performance de traitement (3203) mémorisée à l'avance pour ledit dispositif serveur (2).

3. Dispositif selon la revendication 2, comportant de plus :
une unité pour estimer un temps d'attente de la réponse fournie par le dispositif serveur (2), et
une unité pour envoyer un message de restriction d'accès pour rejeter la demande lorsque le temps d'attente est plus long qu'une durée fixe.

4. Dispositif selon la revendication 2, comportant de plus une unité pour changer une priorité utilisée pour transférer la demande au dispositif serveur (2) conformément à la performance de traitement du dispositif client (1).

5. Dispositif selon la revendication 4, comportant de plus une unité pour réaliser une restriction d'accès sur la demande déjà reçue depuis le dispositif client (1) lorsque la priorité de la demande reçue plus tard est supérieure à celle de la demande déjà reçue.

6. Dispositif selon la revendication 2, comportant de plus une unité pour changer une priorité de la demande transférée au dispositif serveur (2) conformément à la performance de traitement du dispositif client (1).

7. Dispositif selon la revendication 6, comportant de plus une unité pour commander un temps de réponse moyen au dispositif client (1) dans un temps fixe.

8. Dispositif selon la revendication 2, comportant de plus une unité pour fournir un temps de traitement maximal de la demande au dispositif client (1) avant que la demande soit transférée au dispositif serveur (2).

9. Système de service incluant :
un dispositif serveur (2) pour recevoir des demandes de service depuis des dispositifs clients (1), et
un dispositif de contrôle de trafic (3) selon l'une quelconque des revendications 2 à 8.
